# EUROPÄISCHE PATENTSCHRIFT

(11) **EP 1 227 028 B1**
(45) Veröffentlichungstag und Bekanntmachung des Hinweises auf die Patenterteilung: **21.06.2006**
(21) Anmeldenummer: 02001410.6
(22) Anmeldetag: 21.01.2002
(51) Int. Cl.: B62D 25/06, B60R 9/04

(54) **Modular aufgebautes Fahrzeugdach**
Modular vehicle roof
Toit de véhicule modulaire

(30) Priorität: 27.01.2001 DE 10103676
(43) Veröffentlichungstag der Anmeldung: 31.07.2002
(73) Patentinhaber: ADAM OPEL AG, 65423 Rüsselsheim (DE)
(72) Erfinder: Dudek, Angela, 65474 Bischofsheim (DE)

(56) Entgegenhaltungen:
- EP-A- 1 155 942
- DE-A- 10 028 320
- DE-A- 19 947 776
- DE-A- 19 948 646
- DE-C- 4 344 604

## Beschreibung

Die Erfindung bezieht sich auf ein modular aufgebautes Fahrzeugdach, bestehend aus einem Dachrahmen und einem als Baueinheit vorbereiteten, den Dachrahmen schließenden Dacheinsatz, wobei im Dach Vorrichtungen zum Befestigen eines Dachgepäckträgers oder dgl. vorgesehen sind, und den weiteren Merkmalen des Anspruchs 1.
Ein solches Fahrzeugdach ist Gegenstand einer nicht vorveröffentlichten EP 1 155 942 A2.

In der Regel besteht bei PKWs die Möglichkeit, am Fahrzeugdach Zusatzeinrichtungen, wie z. B. einen Dachgepäckträger, anzubauen. Dazu sind im Dach entsprechende Vorrichtungen vorgesehen.

Außerdem geht man immer mehr dazu über, Fahrzeuge modular aufzubauen, wobei ein Modul neben den Teilen, die der klassischen Karosserie zugeordnet werden können, Anbauteile beinhaltet, die nach klassischer Bauweise erst montiert werden, wenn die Karosserie vollständig aufgebaut worden ist. Ein Beispiel hierfür ist das Dach des Fahrzeuges. Während bei einer herkömmlichen Bauweise zunächst die reine, aus Blechen bestehende Karosserie aufgebaut und die lackierte Karosserie anschließend mit Ein- und Anbauten versehen wird, wird bei einer modularen Bauweise das fertig lackierte Dachmodul, bevor es mit der Fahrzeugkarosserie verbunden wird, mit den entsprechenden Einbauten, z. B einem Dachhimmel und weiteren Trimteilen versehen. Zum Teil wird auch schon die Beleuchtungseinrichtung für den Innenraum des Fahrzeuges installiert. Die so vorbereitete Baueinheit, wird mit der lackierten Grundkarosserie verbunden. Diese Bauweise hat insbesondere den Vorteil, dass mit ihr eine flexible Fertigung realisiert werden kann.

Bei den bisher bekannten Dachsystemen sind die Vorrichtungen zum Befestigen des Dachgepäckträgers in den das Dach aufnehmenden Dachrahmen integriert, was die Gestaltungsmöglichkeiten hinsichtlich der Anordnung der Befestigungsmittel einschränkt und mit einem hohen Montageaufwand verbunden ist.

In der oben erwähnten EP 1 155 942 A2 ist daher schon vorgeschlagen worden, dass im Dacheinsatz ein Sockel befestigt ist, der mit Mitteln zum Befestigen des Dachgepäckträgers versehen ist, und dass zum Befestigen des Dacheinsatzes im Dachrahmen der Sockel mit dem Dachrahmen verbunden ist.

Dadurch, dass die Dachgepäckträgerbefestigung dem Dacheinsatz zugeordnet wird, wird der Dachaufbau wesentlich vereinfacht. Dies ermöglicht eine sehr flexible Fertigung, da die Anbringung der Befestigungsmittel an der Grundkarosserie entfällt. Des weiteren wird erreicht, dass ein auf das Fahrzeugdach montierter Dachgepäckträger unmittelbar mit der Autokarosserie verbunden ist, die Dachlast also nicht in den Dacheinsatz eingeleitet wird. Die Steifigkeit des Dacheinsatzes muss daher nicht erhöht werden.
Die Erfindung beruht auf dem Problem, die Verankerung des Sockels im Dacheinsatz zu verbessern.
Zur Lösung des Problems sieht die Erfindung vor, dass zumindest der Randbereich des Dacheinsatzes aus einer Unter- und einer Oberschalebesteht, wobei der Zwischenraum zur Stabilisierung des Randes ausgeschäumt ist und der Sockel in der Ausschäumung eingebettet ist.
Der in den Zwischenraum eingesetzte Sockel wird somit umschäumt und ist damit im Dacheinsatz fixiert. Da er anschließend mit dem Dachrahmen verschraubt wird, muss die Umschäumung im fertig montierten Zustand keine Kräfte mehr aufnehmen, die Unterschale wird vielmehr zwischen dem Sockel und dem Dachrahmen eingeklemmt.

Die Verbindung mit dem Dachrahmen kann in einfacher Weise durch eine Schraubverbindung erfolgen. Dazu wird der Dacheinsatz mit im Sockel verankerten Schraubenbolzen versehen, die durch im Dachrahmen verbundene Löcher hindurchgeführt werden und durch Aufschrauben einer Mutter mit diesem verbunden werden.

Wie auch schon bisher praktiziert, liegen die Befestigungsmittel nicht frei. Vielmehr wird in der Oberschale eine verschließbare Öffnung vorgesehen, die mit einer bündig mit der Oberschale abschließende Verschlusskappe versehen ist, so dass die äußere Oberfläche der Oberschale glatt ist und kein den Luftwiderstands erhöhende Wirbel auslöst. Nur wenn die Befestigungsmittel benötigt werden, wird die Kappe entfernt, so das der Dachgepäckträger befestigt werden kann.

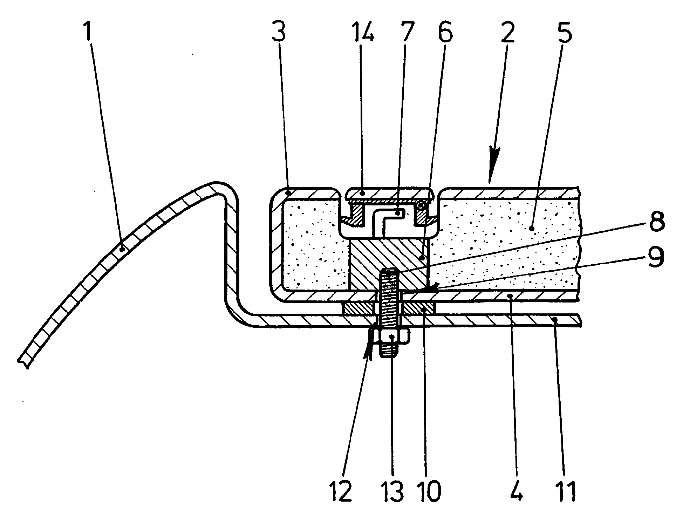

Im folgenden wird anhand eines Ausführungsbeispiels, dargestellt in einer einzigen Figur, die Erfindung näher erläutert. Die Figur zeigt einen Querschnitt durch den seitlichen Rand eines auf einem Dachrahmen 1 aufliegenden Dacheinsatzes 2.

Der Dacheinsatz besteht aus eine Ober- und einer Unterschale 3, 4, die aus einem zu einem U gebogenen Blech bestehen. Der Raum zwischen den Schalen 3, 4 ist mit einer Ausschäumung 5 mit Kunststoff gefüllt, der den Randbereich verstärkt.

In dieser Ausschäumung 5 liegt ein metallischer Sockel 6, an dessen Oberseite sich ein Haken 7 befindet, der von einem entsprechenden Haken am Dachgepäckträger untergriffen werden kann. Die genaue Befestigungsart ist nicht Gegenstand dieser Anmeldung und soll daher hier auch nicht näher erläutert werden.

An der Unterseite des Sockels 6 befindet sich ein Schraubenbolzen 8, der durch eine Öffnung 9 in der Unterschale hindurchgeführt ist. Der Schraubenbolzen 8 ist in den Sockel 6 eingeschraubt und mit diesem verankert.

Der Dacheinsatz 2 wird in den Dachrahmen 1 eingesetzt und liegt unter Zwischenlage eine Dichtung 10 auf einem im Wesentlichen waagerecht verlaufenden Absatz 11 auf. Der Schraubenbolzen 8 ragt durch ein Loch 12 im Absatz 11 hindurch, so dass von unten eine Mutter 13 aufgeschraubt werden kann, wodurch der Dacheinsatz 2 gegen den Dachrahmen 1 verspannt werden kann.

Oberhalb des Sockels 6 befindet sich eine Öffnung in der Oberschale 3, die von einer zu öffnenden Kappe 14 geschlossen ist. Die Kappe 14 schließt bündig mit der Oberschale 3 ab, so dass eine geschlossene Dachfläche entsteht. Zum Befestigen eines Dachgepäckträgers wird die Kappe geöffnet und der Haken 7 freigelegt.

### Bezugszeichenliste

- 1: Dachrahmen
- 2: Dacheinsatz
- 3: Oberschale
- 4: Unterschale
- 5: Ausschäumung
- 6: Sockel
- 7: Haken
- 8: Schraubenbolzen
- 9: Öffnung
- 10: Dichtung
- 11: Absatz
- 12: Loch
- 13: Mutter
- 14: Kappe

## Patentansprüche

1. Modular aufgebautes Fahrzeugdach bestehend aus einem Dachrahmen und einem als Baueinheit vorbereiteten, den Dachrahmen schließenden Dacheinsatz, wobei in dem Dacheinsatz Vorrichtungen zum Befestigen eines Dachgepäckträgers oder dgl. vorsehen sind, wobei im Dacheinsatz (2) ein Sockel (6) befestigt ist, der mit Mitteln (Haken 7) zum Befestigen des Dachgepäckträgers versehen ist, und wobei zum Befestigen des Dacheinsatzes (2) im Dachrahmen (1) der Sockel (6) mit dem Dachrahmen (1) verbunden ist, wobei der Dacheinsatz (2) zumindest im Randbereich aus einer Unter- und einer Oberschale (3, 4) besteht und wobei der Raum zwischen den Schalen (3, 4) ausgeschäumt ist und der Sockel (6) in der Ausschäumung (5) eingebettet ist.

2. Fahrzeugdach nach Anspruch 1, **dadurch gekennzeichnet, dass** die Verbindung mit dem Dachrahmen eine Schraubverbindung (8, 13) ist.

3. Fahrzeugdach nach Anspruch 2, **dadurch gekennzeichnet, dass** ein Schraubenbolzen (8) der Schraubverbindung im Sockel (6) verankert ist und Bestandteil der vorbereiteten Baueinheit ist.

## Claims

1. A vehicle roof of modular construction consisting of a roof frame and a roof insert in the form of a prepared constructional unit which closes the roof frame, wherein devices are provided in the roof insert for the attachment of a roof luggage carrier or the like, wherein a base member (6) is fixed in the roof insert (2) and is provided with means (hook 7) for the attachment of the roof luggage carrier, and wherein the base member (6) is connected to the roof frame (1) for fixing the roof insert (2) in the roof frame (1), wherein at least the edge region of the roof insert (2) consists of a lower and an upper shell (3, 4), and wherein the space between the shells (3, 4) is foamed and the base member (6) is embedded in the foamed mass (5).

2. A vehicle roof according to Claim 1, **characterized in that** the connection to the roof frame is a bolted connection (8, 13).

3. A vehicle roof according to Claim 2, **characterized in that** a threaded bolt (8) of the bolted connection is anchored in the base member (6) and is a constituent of the prepared constructional unit.

## Revendications

1. Toit de véhicule à structure modulaire constitué d'un cadre de toit et d'un insert de toit sous forme d'unité structurelle préparée en avance, fermant le cadre de toit, des dispositifs destinés à fixer une galerie de toit ou similaire étant prévus dans l'insert de toit, un socle (6) étant fixé dans l'insert de toit (2), le socle étant muni de moyens (crochet 7) destinés à fixer la galerie de toit, et le socle (6) étant relié au cadre de toit (1) pour fixer l'insert de toit (2) dans le cadre de toit (1), l'insert de toit (2) étant constitué, au moins dans la zone latérale, d'une coque inférieure et d'une coque supérieure (3, 4) et l'espace situé entre les coques (3, 4) étant rempli de matière alvéolaire et le socle (6) étant encastré dans la matière alvéolaire (5).

2. Toit de véhicule selon la revendication 1, **caractérisé en ce que** l'assemblage au cadre de toit est un assemblage par vis (8, 13).

3. Toit de véhicule selon la revendication 2, **caractérisé en ce qu'**un boulon fileté (8) de l'assemblage par vis est ancré dans le socle (6) et fait partie intégrante de l'unité structurelle préparée en avance.
